(19) Europäisches Patentamt
European Patent Office
Office européen des brevets

(11) **EP 4 394 454 B1**

(12) **FASCICULE DE BREVET EUROPEEN**

(45) Date de publication et mention
de la délivrance du brevet:
**15.10.2025 Bulletin 2025/42**

(21) Numéro de dépôt: **23220685.4**

(22) Date de dépôt: **29.12.2023**

(51) Classification Internationale des Brevets (IPC):
**G01T 1/167** (2006.01)     **G01T 1/36** (2006.01)
**G21D 1/00** (2006.01)

(52) Classification Coopérative des Brevets (CPC):
**G01T 1/167; G01T 1/36**

(54) **PROCÉDÉ DE MESURE NON DESTRUCTIVE DE L'ENRICHISSEMENT DE L'URANIUM**

VERFAHREN ZUR ZERSTÖRUNGSFREIEN MESSUNG DER ANREICHERUNG VON URAN

METHOD FOR NON-DESTRUCTIVE MEASUREMENT OF URANIUM ENRICHMENT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.12.2022 FR 2214721**

(43) Date de publication de la demande:
**03.07.2024 Bulletin 2024/27**

(73) Titulaire: **Commissariat à l'Energie Atomique et aux Energies Alternatives**
**75015 Paris (FR)**

(72) Inventeur: **VENARA, Julien**
**30131 PUJAUT (FR)**

(74) Mandataire: **INNOV-GROUP**
**209 Avenue Berthelot**
**69007 Lyon (FR)**

(56) Documents cités:
**US-A- 3 986 029**

• ASHRAFI SALEH ET AL: "Measurement of natural radioactivity of Iranian granite samples using beta-gamma coincidence spectrometer and maximum likelihood method", ENVIRONMENTAL EARTH SCIENCES, SPRINGER BERLIN HEIDELBERG, BERLIN/ HEIDELBERG, vol. 78, no. 15, 18 July 2019 (2019-07-18), pages 1 - 8, XP036857973, ISSN: 1866-6280, [retrieved on 20190718], DOI: 10.1007/ S12665-019-8434-6

• VENARA J ET AL: "Design and development of a portable [beta]-spectrometer for 90Sr activity measurements in contaminated matrices", NUCLEAR INSTRUMENTS & METHODS IN PHYSICS RESEARCH. SECTION A, ELSEVIER BV * NORTH-HOLLAND, NL, vol. 953, 11 November 2019 (2019-11-11), XP085976822, ISSN: 0168-9002, [retrieved on 20191111], DOI: 10.1016/J.NIMA.2019.163081

• RYU JICHANG ET AL: "Development of Neural Network Model With Explainable AI for Measuring Uranium Enrichment", IEEE TRANSACTIONS ON NUCLEAR SCIENCE, IEEE, USA, vol. 68, no. 11, 28 September 2021 (2021-09-28), pages 2670 - 2681, XP011888344, ISSN: 0018-9499, [retrieved on 20211117], DOI: 10.1109/TNS.2021.3116090

**Description**

## DOMAINE TECHNIQUE

Le domaine technique de l'invention concerne une technique de mesure non destructive de l'enrichissement de l'uranium en son isotope 235

## ART ANTERIEUR

Actuellement, la méthode de référence pour évaluer, de façon non destructive, l'enrichissement del'uranium en son isotope 235 est la spectrométrie gamma.

La spectrométrie gamma est une des techniques de mesures nucléaires non destructives passives la plus couramment employée pour obtenir des informations qualitatives et quantitatives sur les radionucléides émetteurs gamma.

L'uranium 235 et certains descendants de l'uranium 238 peuvent être mesurés par spectrométrie gamma. Cependant, la spectrométrie gamma est assez complexe à mettre en œuvre, et suppose certaines hypothèses quant à la profondeur et au gradient de contamination, en particulier dans des objets poreux tels des parois de béton. Ces hypothèses ne sont pas forcément valides.

De plus, lorsque l'enrichissement en $^{235}$U est élevé, et/ou pour de faibles quantités d'uranium, le temps d'acquisition peut être long, du fait de la faible intensité des émissions gamma des radioéléments descendants de $^{238}$U. Une autre technique de mesure de l'uranium est connue de ASHRAFI SALEH ET AL: "Measurement of natural radioactivity of Iranian granite samples using beta-gamma coincidence spectrometer and maximum likelihood method", ENVIRONMENTAL EARTH SCIENCES, vol. 78, no. 15. Cet article divulgue un procédé d'estimation de l'activité en uranium d'un objet, à l'aide d'un détecteur, le détecteur étant configuré pour former des impulsions lorsqu'il est exposé à des particules β, le détecteur étant relié à un circuit de mesure spectrométrique, configuré pour établir un spectre, le spectre correspondant à un histogramme de l'énergie des impulsions formées durant une période de mesure.

L'inventeur propose une méthode alternative d'estimation de l'enrichissement en uranium. La méthode peut être déployée sur des structures de type génie civil, des équipements ou des échantillons prélevés. Il s'agit d'une méthode basée sur un dispositif peu cher et simple à mettre en œuvre.

## EXPOSE DE L'INVENTION

Un premier objet de l'invention est, selon la revendication 1, un procédé d'estimation d'un enrichissement en $^{235}$U d'un objet, à l'aide d'un détecteur, le détecteur étant configuré pour former des impulsions lorsqu'il est exposé à des particules β, le détecteur étant relié à un circuit de mesure spectrométrique, configuré pour établir un spectre, le spectre correspondant à un histogramme de l'énergie des impulsions formées durant une période de mesure, le procédé comportant les étapes suivantes :

- a) disposition du détecteur face à l'objet et acquisition d'un spectre de mesure, le spectre de mesure étant représentatif d'une distribution en énergie de particules β émises par des descendants de $^{238}$U et par des descendants de $^{235}$U;
- b) à partir du spectre de mesure, formation éventuelle d'un spectre corrigé;
- c) à partir du spectre de mesure ou du spectre corrigé, détermination d'une première valeur spectrale dans une première bande d'énergie s'étendant à partir d'une première énergie minimale, la première énergie minimale étant supérieure ou égale à 300 keV ;
- d) à partir du spectre de mesure ou du spectre corrigé, détermination d'une deuxième valeur spectrale dans une deuxième bande d'énergie s'étendant en dessous d'une deuxième énergie maximale, la deuxième énergie maximale étant inférieure ou égale à 300 keV ;
- e) calcul d'un ratio entre la première valeur spectrale et la deuxième valeur spectrale ;
- f) application d'une fonction de calibration au ratio déterminé lors de l'étape e), de façon à estimer l'enrichissement en $^{231}$U.

Le procédé peut comporter les sous-étapes :

- b1) interposition d'un écran entre le détecteur et l'objet et acquisition d'un spectre de fond, l'écran étant configuré pour absorber les particules β émises par l'objet ;
- b2) correction du spectre de mesure, en utilisant le spectre de fond, pour obtenir un spectre corrigé

L'écran utilisé lors de la sous-étape b1) peut être est un écran d'aluminium dont l'épaisseur est supérieure ou égale à 3 mm ou à 4 mm.

Selon une possibilité, lors de l'étape c), la première bande d'énergie s'étend jusqu'à une première énergie maximale, l'énergie maximale étant supérieure ou égale à 1000 keV ou 1500 keV ou 2000 keV.

Selon une possibilité, lors de l'étape a), la distance entre le détecteur et l'objet est :

- supérieure à 1 mm ou à 5 mm ;
- et/ou inférieure à 20 mm ou à 10 mm.

Lorsque l'objet est un objet naturellement radioactif, le procédé peut comporter :

- (i) prise en compte d'une activité naturelle de l'objet ;
- (ii) modélisation d'un spectre β de l'activité naturelle de l'objet (SpRN) détecté par le détecteur ;
- l'étape b) comporte une correction du spectre mesuré en utilisant le spectre β de l'activité naturelle de l'objet, pour obtenir le spectre corrigé.

Selon une possibilité, l'étape (i) résulte d'une mesure par spectrométrie gamma réalisée sur l'objet.

Le détecteur peut comporter un matériau scintillateur organique. Le détecteur peut comporter un matériau semi-conducteur.

Un deuxième objet de l'invention est, selon la revendication 10, un dispositif d'estimation d'un enrichissement en $^{235}$U d'un objet, le dispositif comportant:

- Un détecteur (10) comportant un matériau détecteur (11) configuré pour former des impulsions sous l'effet d'une exposition à des particules β ;
- un circuit de spectrométrie (13), relié au détecteur, et configuré pour former un histogramme de l'amplitude des impulsions détectées par le détecteur durant une période d'acquisition ;
- une unité de traitement (20), reliée au circuit de spectrométrie, et configurée pour mettre en œuvre les étapes b) à f) d'un procédé selon le premier objet de l'invention

Le détecteur peut comporter un matériau scintillateur organique, l'épaisseur du matériau scintillateur organique étant de préférence comprise entre 3 mm et 10 mm. Le détecteur peut comporter un matériau semi-conducteur.

Le détecteur peut être d'une enveloppe configurée pour absorber des particules α d'énergie supérieure ou égale à 4.5 MeV ou à 5 MeV.

Le dispositif peut comporter un écran mobile, configuré pour passer d'une configuration fermée, dans laquelle l'écran est interposé entre le matériau détecteur et l'objet, à une configuration ouverte dans laquelle l'écran laisse libre un espace entre le matériau détecteur et l'objet. L'invention sera mieux comprise à la lecture de l'exposé des exemples de réalisation présentés, dans la suite de la description, en lien avec les figures listées ci-dessous.

## <u>FIGURES</u>

La figure 1 schématise un dispositif de mesure.

La figure 2 montre une évolution de l'énergie déposée dans le matériau détecteur du dispositif par des particules β en fonction de l'épaisseur de ce dernier.

La figure 3 montre une évolution de l'énergie déposée dans le matériau détecteur par des particules β en fonction de l'épaisseur d'un écran d'aluminium interposé entre le matériau détecteur et l'objet

La figure 4A montre un spectre de l'énergie de particules β détectées par le matériau détecteur en fonction de différentes distances entre le matériau détecteur et l'objet, la contamination en uranium étant supposée surfacique.

La figure 4B montre un spectre de l'énergie de particules β détectées par le matériau détecteur en fonction de différentes distances entre le matériau détecteur et l'objet, la contamination en uranium étant supposée volumique, selon une épaisseur de 2 mm.

La figure 5 montre des spectres de l'énergie de particules β détectées par le matériau détecteur en présence d'un écran d'aluminium, sans l'écran d'aluminium. On a également représenté un spectre corrigé résultant de la soustraction des spectres modélisés avec et sans écran.

La figure 6 montre un spectre de l'énergie de particules β détectées par le matériau détecteur dues à la radioactivité naturelle de l'objet, ainsi que des spectres de l'énergie de particules β détectées par le matériau détecteur avec et sans soustraction du spectre de l'activité naturelle.

La figure 7 montre des simulations de spectres de l'énergie de particules β détectées par le matériau détecteur dans différentes configurations.

La figure 8A montre des simulations spectres de l'énergie de particules β détectées par le matériau détecteur résultant de différents radioéléments, pour un faible enrichissement de $^{235}$U.

La figure 8B montre des simulations de spectres de l'énergie de particules β détectées par le matériau détecteur résultant de différents radioéléments, pour un fort enrichissement de $^{235}$U.

La figure 9 montre un spectre de l'énergie de particules α détectées par le matériau détecteur.

La figure 10 montre un spectre de l'énergie de particules β détectées par le matériau détecteur.

La figure 11 montre l'évolution d'une fonction de transfert, permettant de convertir une valeur spectrale en niveau d'activité, et cela pour différentes profondeurs de contamination.

Les figures 12A, 12B et 12C montrent des cartographies expérimentales effectuées avec un dispositif selon l'invention.

La figure 13A montre l'évolution d'un ratio entre une première valeur spectrale et une deuxième valeur spectrale en fonction de l'enrichissement en $^{235}$U, en prenant en compte une contamination surfacique.

La figure 13B montre l'évolution d'un ratio entre une première valeur spectrale et une deuxième valeur spectrale en fonction de l'enrichissement en $^{235}$U, en prenant en compte une contamination volumique.

La figure 14 montre les principales étapes d'un procédé de détermination de l'activité en U en mettant en œuvre l'invention.

## EXPOSE DE MODES DE REALISATION PARTICULIERS

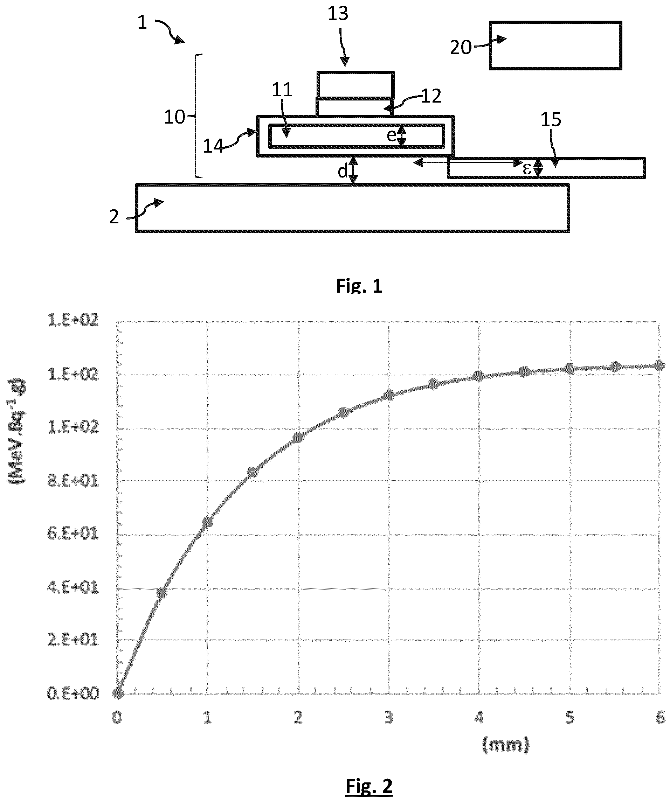

La figure 1 représente un dispositif de mesure permettant une mesure de l'activité en uranium d'un objet 2. Le dispositif comporte un détecteur scintillateur 10, comportant un matériau **scintillateur** 11 de préférence organique, de préférence à base de Polyvinyltoluène (PVT). Sous l'effet d'interactions entre un rayonnement ionisant et le matériau scintillateur, des impulsions lumineuses sont formées. Ces impulsions lumineuses sont converties en impulsions électriques par un ou plusieurs photodétecteurs 12. Les impulsions électriques sont ensuite traitées par un circuit de spectrométrie. Le circuit de spectrométrie 13 est configuré pour former un histogramme en amplitude des impulsions détectées par le scintillateur organique durant une période d'acquisition.

En mettant en œuvre une fonction de calibration en énergie, résultant d'un étalonnage en énergie, il est usuel d'effectuer une correspondance entre l'amplitude des impulsions et des valeurs d'énergie. Lorsqu'une particule ionisante dépose toute son énergie dans le scintillateur, l'amplitude de l'impulsion qu'elle génère correspond à l'énergie de la particule avant l'interaction dans le matériau détecteur.

Le recours à un détecteur scintillateur organique est approprié pour effectuer une spectrométrie de particules chargées, de type β. Un scintillateur organique est également sensible à des photons ionisants de type X ou γ. Cependant, les matériaux formant un scintillateur organique ont un faible numéro atomique, ce qui les rend peu propices à la formation d'interactions photoélectriques. Ainsi, un scintillateur organique est considéré comme non approprié pour des applications de type spectrométrie X ou γ.

Le détecteur scintillateur est recouvert d'une enveloppe optiquement étanche 14, de faible épaisseur, par exemple un film de PET (Polyéthylène Téréphtalate) aluminisé, d'épaisseur 18 μm pour assurer une étanchéité à la lumière ambiante. La faible épaisseur permet de minimiser l'atténuation des rayonnements β. Dans la suite du texte, le terme particule β désigne une particule β⁻. L'épaisseur de l'enveloppe peut atteindre 30 μm pour arrêter les particules alpha d'énergie 4.5 MeV ou 5 MeV.

L'épaisseur e du détecteur scintillateur est de 4 mm. Des détails quant à l'épaisseur du scintillateur seront donnés en lien avec la figure 2. Un matériau scintillateur organique présente l'avantage d'être peu sensible au rayonnement gamma, du fait d'un faible numéro atomique. De plus, ce type de scintillateur limite le phénomène de rétrodiffusion des particules β. Un autre avantage est une certaine stabilité de la réponse du matériau scintillateur vis-à-vis de variations thermiques. La réponse, en terme d'intensité lumineuse produite, en étant exposé à un même rayonnement, est stable de 0° à 50°C, ce qui est approprié à des conditions d'utilisation sur le terrain.

Le dispositif de mesure comporte une unité de traitement 20, configurée pour mettre en œuvre des étapes de traitement de spectres décrites par la suite. L'unité de traitement 20 est programmée pour exécuter des instructions codées dans une mémoire, reliée à l'unité de traitement par liaison filaire ou sans fil. L'unité de traitement 20 peut notamment comporter un microprocesseur.

Selon une variante, le détecteur peut comporter un matériau semi-conducteur, adapté à la spectrométrie β. Il peut par exemple s'agir d'un semi-conducteur de type Silicium, par exemple un silicium planar.

L'avantage d'un matériau scintillateur organique est la capacité à être fabriqué selon différentes dimensions et différentes formes. Lorsque l'objet est un échantillon prélevé, la forme peut être adaptée à la forme de l'échantillon.

Le détecteur 10 comporte un écran mobile 15, faisant office d'obturateur, configuré pour être disposé :

- dans une position fermée, entre le détecteur 10 et l'objet à mesurer 2 ;
- ou dans une position ouverte, libérant l'espace entre le détecteur 10 et l'objet 2, comme représenté sur la figure 1.

Dans cet exemple, le dispositif est principalement dédié au contrôle radiologique de parois. Afin de pouvoir être déployé le long de grandes surfaces, la surface du matériau détecteur, dans un plan perpendiculaire à son épaisseur, est de 50 cm x 50 cm. Cela permet d'adresser une surface importante lors de chaque mesure, tout en étant suffisamment compact et léger pour être aisément manipulé.

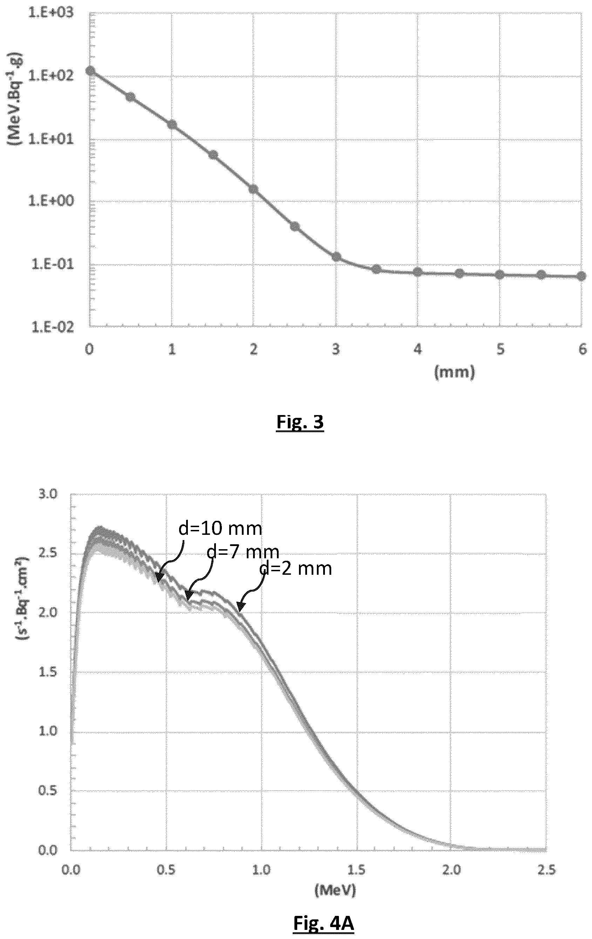

Dans cet exemple, l'écran 15 est mobile en translation dans un plan parallèle au matériau détecteur 11. L'écran est par exemple formé d'aluminium, l'épaisseur étant de préférence égale à 4 mm. Des détails relatifs à l'épaisseur de l'écran 15 sont donnés en lien avec la figure 3. L'écran 15 peut être relié au matériau détecteur par un système de glissière, autorisant une translation de l'écran par rapport au matériau détecteur.

L'objet 2 est un objet à contrôler, susceptible de présenter une activité massique ou surfacique d'Uranium, l'isotopie étant connue ou inconnue. Dans les exemples décrits par la suite, l'objet est une paroi de béton.

L'invention est basée sur une détection, par le détecteur 10, de particules $\beta$ émises par des isotopes descendants d'isotopes d'Uranium. Il s'agit notamment de $^{234m}$Pa, qui est en équilibre radioactif avec $^{238}$U, et émet des particules $\beta$ jusqu'à une énergie maximale E$\beta$max égale à 2269 keV. On peut également exploiter la détection de particules $\beta$ émises par $^{231}$Th (descendant de $^{235}$U), dont E$\beta$max = 308 keV ou $^{234}$Th (descendant de $^{238}$U), avec E$\beta$max = 198 keV.

La figure 2 représente une quantité d'énergie (axe des ordonnées - unité MeV.Bq$^{-1}$.g)), déposées par des particules $\beta$ émises par une répartition homogène de $^{234m}$Pa dans une profondeur de béton de 2 mm. L'axe des abscisses correspond à l'épaisseur (unité mm) du matériau scintillateur 10. La profondeur de 2 mm correspond au parcours maximal des particules $\beta$ d'énergie 2269 keV (énergie d'émission maximale de $^{234m}$Pa) dans le béton. La figure 2 a été obtenue par simulation, en considérant une distance d=7.5 mm entre le matériau détecteur et le béton. On observe qu'en utilisant une épaisseur e de 4 mm, le matériau scintillateur permet d'absorber 97% de l'énergie d'émission $\beta$ de $^{234m}$Pa. La simulation a été effectuée par le code de calcul MCNP6 (Monte Carlo N Particles), qui est un code de référence dans le domaine de la modélisation des interactions entre les rayonnements ionisants ($\beta$, $\gamma$, neutrons) et la matière.

La figure 3 représente une quantité d'énergie (axe des ordonnées - unité MeV.Bq$^{-1}$.g)), déposées par des particules $\beta$ émises par une répartition homogène de $^{234m}$Pa dans une profondeur de béton de 2 mm. L'axe des abscisses correspond à l'épaisseur (unité mm) de l'écran d'aluminium 15. La figure 3 a été obtenue par simulation, en considérant une distance d=7.5 mm entre le matériau détecteur et le béton. On observe qu'au-delà d'une épaisseur $\varepsilon$ de 4 mm d'aluminium, le gain en terme d'absorption des particules $\beta$ est négligeable. Une épaisseur de 4 mm est donc suffisante pour obturer efficacement le matériau détecteur vis-à-vis des particules $\beta$ émises par $^{234m}$Pa.

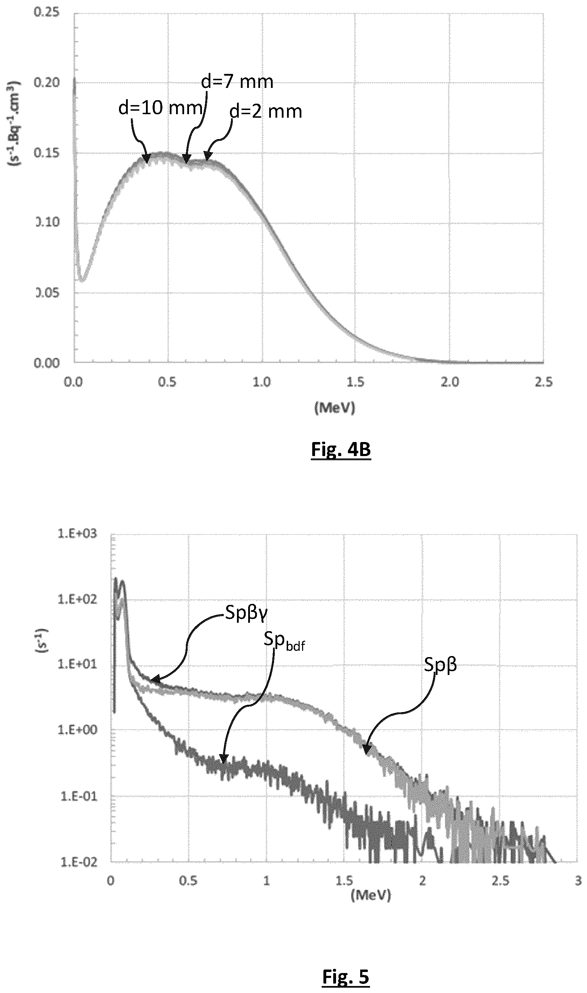

Les figures 4A et 4B adressent la question de la distance entre le détecteur et l'objet à contrôler. L'objet contrôlé étant potentiellement contaminant, il est préférable d'éviter que le détecteur 10 soit en contact direct avec l'objet. Un léger recul est utile, de façon à permettre à l'écran 15 de passer de la position ouverte à la position fermée. La figure 4A montre des simulations de spectres de l'énergie déposée par des particules $\beta$ dans le matériau scintillateur, tel que décrit en lien avec la figure 1. On a considéré une répartition surfacique homogène de $^{234m}$Pa sur une paroi et on a pris en compte plusieurs distances d du détecteur par rapport à la paroi : d = 2 mm ; d = 7 mm et d = 10 mm. Sur la figure 4A, l'axe des abscisses correspond l'énergie (MeV) et l'axe des ordonnées correspond au taux de comptage (s$^{-1}$.Bq$^1$.cm$^2$). On observe qu'entre 2 mm et 10 mm, le spectre n'est pas significativement modifié. L'écart entre les spectres acquis en considérant des distances de 7 mm et de 10 mm est négligeable.

La figure 4B montre des simulations du même type que celles décrites en lien avec la figure 4A. Sur la figure 4B, on a considéré une répartition volumique homogène de $^{234m}$Pa sur une épaisseur de 2 mm de béton. On a pris en compte les mêmes distances d du détecteur par rapport à la paroi que sur la figure 4A. L'écart entre les spectres acquis en considérant des distances de 2.5 mm et de 10 mm est négligeable.

L'inventeur considère que la distance optimale entre l'objet 2 et le détecteur 10 est comprise entre 5 mm et 10 mm. Au-delà de 10 mm, on risque une perte d'efficacité, c'est-à-dire une diminution du nombre de particules $\beta$ détectées. En deçà de 5 mm, la manipulation de l'écran devient complexe, ce dernier étant trop près de l'objet, avec des risques de contact entre l'écran et l'objet. Par la suite, la distance entre le détecteur et l'objet est égale à 7.5 mm.

La figure 5 montre l'effet de l'obturation du détecteur par l'écran 15 sur le spectre mesuré par le détecteur. La figure 5 représente des spectres mesurés expérimentalement face à une paroi contaminée en uranium. Axe des ordonnées : taux de comptage (s$^{-1}$) -axe des abscisses : énergie (MeV). On a mesuré respectivement un spectre sans écran Sp$\beta\gamma$ (écran dans la position ouverte, telle que représenté sur la figure 1), un spectre avec écran Sp$_{bdf}$ (écran dans la position fermée). Les spectres ont été mesurés selon une même durée d'acquisition de 120 secondes. L'écran était une plaque d'aluminium d'épaisseur 4 mm. Le spectre avec écran, noté Sp$_{bdf}$ est considéré comme représentatif du bruit de fond $\gamma$. Le bruit de fond $\gamma$ est dû aux radioéléments émetteurs $\gamma$ présents dans l'objet (par exemple des radioéléments naturels) ou dans l'environnement du détecteur. La soustraction du spectre avec écran Sp$_{bdf}$ du spectre sans écran permet d'obtenir un spectre corrigé du bruit de fond $\gamma$. Le spectre corrigé Sp$\beta$, ou spectre $\beta$ brut, est considéré comme uniquement représentatif des particules $\beta$ émises par l'objet.

Parmi les radioéléments naturels potentiellement présents dans l'objet, citons par exemple $^{40}$K, ainsi que des descendants du $^{232}$Th et de $^{238}$U. De tels radioéléments sont par exemple présents dans des objets en béton. Le bruit de fond $\gamma$ peut également résulter de radioactivité artificielle présente dans l'environnement du détecteur.

Lorsque l'objet comporte une radioactivité naturelle, le spectre $\beta$ brut Sp$\beta$ comporte une composante naturelle due aux particules $\beta$ émises par les radioéléments naturels. Cette composante naturelle peut, dans une première approche, être négligée car elle est généralement assez faible. Le tableau 1 montre les différents radionucléides émetteurs $\beta$ d'origine naturelle et artificielle susceptible d'être rencontrés dans une paroi en béton potentiellement contaminée en uranium.

Tableau 1

| Emetteurs bêta | Energie max (keV) | Intensité (%) | Origine |
|---|---|---|---|
| 40K | 1311.07 | 89.25 | Naturel |
| Chaine de désintégration de l'235U | | | |
| 231Th | 307.85 | 29 | Naturel & Artificiel |
| 227Ac | 44.8 | 53 | Naturel |
| 223Fr | 1149.2 | 1 | Naturel |
| 211Pb | 1367 | 91.28 | Naturel |
| 207Tl | 1418 | 99.73 | Naturel |
| Chaine de désintégration de l'2380 | | | |
| 234Th | 198 | 77.8 | Nature! & Artificiel |
| 234mPa | 2269 | 97.599 | Naturel & Artificiel |
| 214Pb | 1019 | 9.2 | Naturel |
| 2148i | 3270 | 19.67 | Naturel |
| 210Pb | 63.5 | 19.8 | Naturel |
| 210Bi | 1162 | 100 | Naturel |
| Chaine de désintégration du 232Th | | | |
| 228Ra | 39.5 | 12 | Naturel |
| 228Ac | 2066 | 6 | Naturel |
| 212Pb | 569.9 | 13.3 | Naturel |
| 2128i | 2252.1 | 55.31 | Naturel |
| 208Tl | 1801.3 | 49.2 | Naturel |

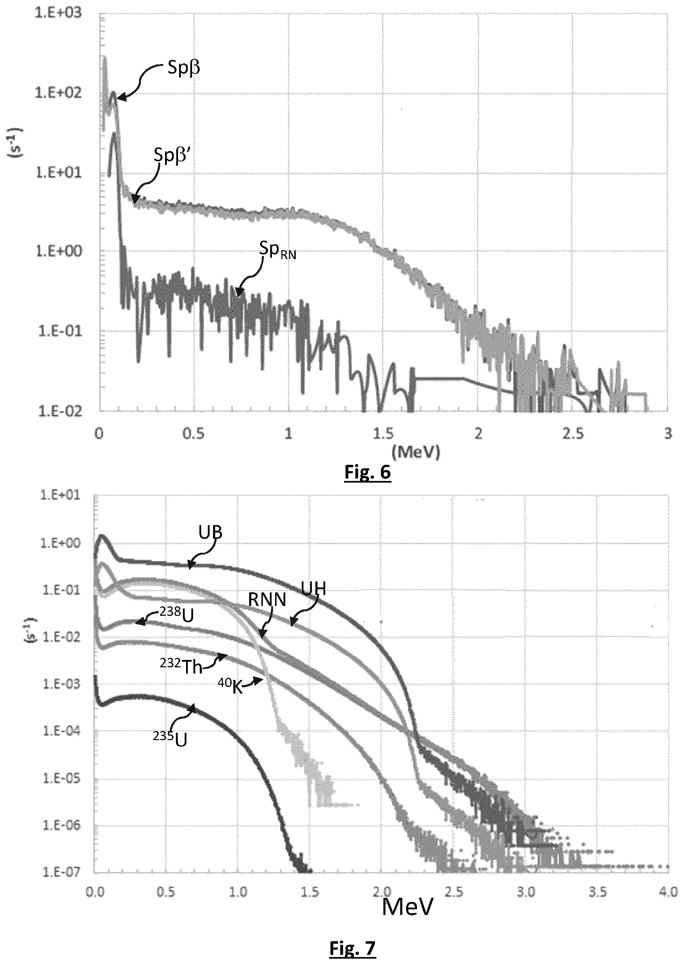

La figure 6 montre le spectre $\beta$ corrigé Sp$\beta$, tel que décrit en lien avec la figure 5 (spectre $\beta$ brut), ainsi qu'un spectre $\beta$, également corrigé du bruit de fond $\gamma$, mesuré face à une paroi de béton non contaminée (spectre de bruit de fond naturel ou spectre de bruit de fond RN, noté SpRN). La paroi de béton non contaminée était située dans la même installation que la paroi contaminée, sur laquelle le spectre $\beta$ corrigé a été formée. Ainsi, le spectre $\beta$ de bruit de fond RN, noté SpRN, peut être considéré comme représentatif d'une contribution naturelle $\beta$ dans le spectre $\beta$ corrigé. La figure 6 montre un spectre $\beta$ net, noté Sp$\beta$', obtenu en soustrayant le spectre $\beta$ de bruit de fond naturel SpRN du spectre $\beta$ brut. Le spectre $\beta$ net Sp$\beta$'est ainsi représentatif de l'activité $\beta$ artificielle dans la paroi mesurée.

La figure 7 représente des spectres $\beta$ simulés avec le code de calcul MCNP6, dans un matériau détecteur tel que précédemment décrit (50 cm x 50 cm x 4 mm), en prenant en compte des activités massiques de $^{232}$Th, $^{238}$U et $^{40}$K mesurées par spectrométrie gamma sur une paroi considérée comme non contaminée. La mesure par spectrométrie gamma a permis d'estimer des niveaux d'activités de 15 Bq/Kg pour $^{232}$Th, 22 Bq/Kg pour $^{238}$U, et 485 Bq/Kg pour $^{40}$K. Ces activités massiques permettent de simuler la composante naturelle dans le spectre $\beta$ mesuré par le détecteur. Sur la figure 7, on a représenté :

- la composante due à $^{232}$Th dans le spectre $\beta$ ;
- la composante due à $^{238}$U dans le spectre $\beta$ ;

- la composante due à $^{40}K$ dans le spectre β ;
- la composante due à $^{235}U$ dans le spectre β, en supposant une enrichissement naturel de l'uranium : la masse de $^{235}U$ correspond à 0.72% de la masse d'uranium ;

Sur la figure 7, on a également représenté une simulation de spectre β résultant de $^{234m}Pa$ en prenant en compte une activité surfacique homogène de 0.4 Bq.cm$^{-2}$ et un enrichissement de 1% en masse en $^{235}U$ (spectre UB), et en prenant en compte un enrichissement de 8.16% en masse en $^{235}U$ (spectre UH).

Dans ces simulations, la distance entre la paroi et le détecteur était considérée égale à 7.5 mm, et la densité du béton était considérée égale à 2.3 g.cm$^{-3}$.

On observe que :

- la composante naturelle du spectre β est dominée par $^{40}K$, jusqu'à l'énergie 1311 keV, qui correspond à l'énergie maximale des particules β émises par $^{40}K$ ;
- la mesure du spectre β résultant de $^{234m}Pa$ est largement supérieure à la contribution naturelle à faible enrichissement ainsi qu'à enrichissement élevé, au-delà de 1 MeV.
- Il est possible de modéliser la composante naturelle dans un spectre β mesuré par le détecteur, en prenant en compte des activités massiques, établies a priori ou mesurées, des principaux radioéléments émetteurs β naturels.

Par ailleurs, des simulations ont montré que la composante γ de l'activité naturelle n'est pas absorbée de façon significative par l'écran d'aluminium. Aussi, la soustraction du spectre de bruit de fond, mesuré en présence de l'écran d'aluminium, permet de s'affranchir de la composante γ de l'activité naturelle.

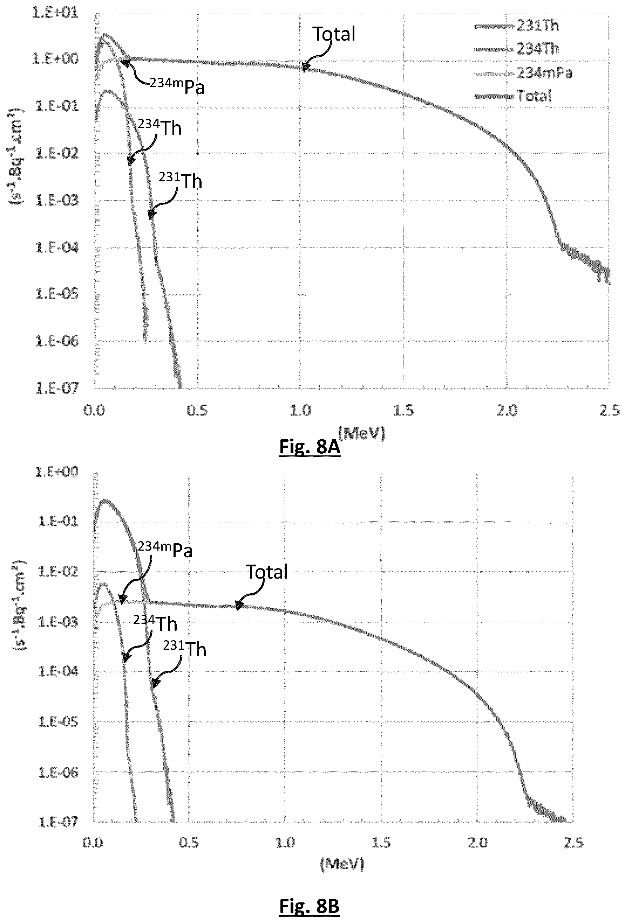

Les figures 8A et 8B montrent des simulations de spectres β mesurés par un détecteur tel que décrit sur la figure 1, en prenant en compte une activité surfacique homogène d'uranium, sur un élément de paroi de 50 cm de côté, en prenant en compte respectivement un enrichissement en $^{235}U$ de 1% et de 82.55% en masse. Par activité surfacique, on entend une activité répartie sur une profondeur de 10 μm. Sur chacune de ces figures, on a représenté les contributions de $^{234m}Pa$, $^{234}Th$ et $^{231}Th$. $^{234m}Pa$ et $^{234}Th$ sont des descendants de $^{238}U$, tandis que $^{231}Th$ est un descendant de $^{235}U$. La distance entre le détecteur et la paroi était considérée égale à 7.5 mm.

Sur chacune de ces figures, l'axe des ordonnées correspond à un taux de comptage (s$^{-1}$.Bq$^{-1}$.cm$^2$) et l'axe des abscisses correspond à un niveau d'énergie (MeV).

Les figures 8A et 8B montrent que quel que soit le niveau d'enrichissement, le spectre est dominé par la contribution de $^{234m}Pa$, cette dernière étant plus faible à fort enrichissement (figure 8B) qu'à faible enrichissement (figure 8A). On observe qu'en considérant une première plage d'énergie ΔE1 délimitée par une première énergie minimale E1min, supérieure ou égale à 300 keV, et qu'en sommant le spectre sur cette première plage d'énergie ΔE1, la valeur spectrale obtenue ne dépend que de l'activité de $^{234m}Pa$. Par valeur spectrale, on entend une valeur mesurée à partir du spectre. Il peut notamment s'agir d'un taux de comptage ou d'un comptage dans la plage d'énergie. La valeur spectrale obtenue sur la première plage d'énergie ΔE1 est une première valeur spectrale notée N1.

De préférence, la première plage d'énergie ΔE1 s'étend jusqu'à une première énergie maximale E1max supérieure ou égale à 2269 keV, cette dernière correspondant à l'énergie d'émission maximale d'une particule β par $^{234m}Pa$. Par exemple, la première plage d'énergie ΔE1 est [300 keV ; 2500 keV]. Une telle plage d'énergie permet de collecter la totalité du contenu spectral utile de l'activité β de $^{234m}Pa$. La première énergie maximale E1max peut être égale à 2300 keV, ou être inférieure 2000 keV ou 1500 keV ou 1000 keV. On retient que la première énergie maximale E1max est de préférence inférieure ou égale à 2500 keV, voire à 2300 keV. Ainsi, bien que la première plage d'énergie optimale soit [300 keV ; 2500 keV], une plage d'énergie plus restreinte, dans cet intervalle, peut convenir. Une plage d'énergie s'étendant à partir de 300 keV, ou à partir d'une première valeur minimale E1min supérieure ou égale à 300 keV, et inférieure ou égale à 1000 keV, ou 1500 keV peut convenir. On note qu'au-delà de 1000 keV, la valeur des canaux spectraux diminue. Il est donc préférable que la première énergie minimale E1min soit comprise entre 300 keV et 1000 keV. Il est envisageable de ne pas prendre en compte une première énergie maximale : E1max = +∞: la plage considérée est alors [E1min, +∞], avec 300 keV ≤ E1min≤1000 keV.

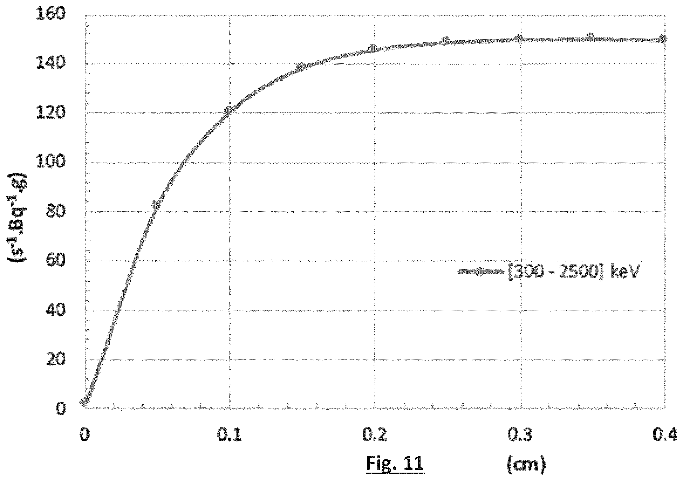

La première valeur spectrale N1, dans la première plage d'énergie ΔE1 = [E1min, E1max] précédemment définie, est ensuite destinée à être traitée par une fonction de transfert, de façon à pouvoir estimer un niveau d'activité en $^{238}U$. L'établissement de la fonction de transfert est décrit par la suite, en lien avec la figure 11. La prise en compte de l'enrichissement η permet ensuite de convertir l'activité en $^{238}U$ en activité en U.

Les figures 8A et 8B montrent un autre aspect intéressant de l'invention : on peut définir une deuxième plage d'énergie ΔE2 , comprise entre 0 keV et 300 keV, dans laquelle le spectre β est influencé par $^{231}Th$, ce radioélément descendant de $^{235}U$. Ainsi, on peut définir une deuxième plage d'énergie ΔE2=[E2min, E2max], comprise entre une deuxième énergie minimale E2min≥0 et une deuxième énergie maximale E2max≤300 keV, dans lequel la valeur spectrale N2, dite deuxième valeur spectrale, dépend de $^{235}U$, en particulier à fort enrichissement.

Un ratio N1/N2 des première et deuxième valeur spectrale dépend de l'enrichissement η. Ainsi, la mesure expérimentale de ce ratio peut être utilisée pour estimer l'enrichissement η de l'uranium.

Lorsque l'enrichissement η de l'uranium en $^{235}$U est inconnu, la première valeur spectrale N1 permet d'estimer $^{238}$U, en utilisant la fonction de transfert *FT*. En effet, le contenu spectral, dans la première plage d'énergie, ne dépend pas de l'enrichissement. Le ratio des première et deuxième valeurs spectrales permet d'estimer l'enrichissement η. L'activité en $^{238}$U peut alors être utilisée pour estimer l'activité en U. L'enrichissement en $^{235}$U peut également être déterminé expérimentalement par spectrométrie gamma.

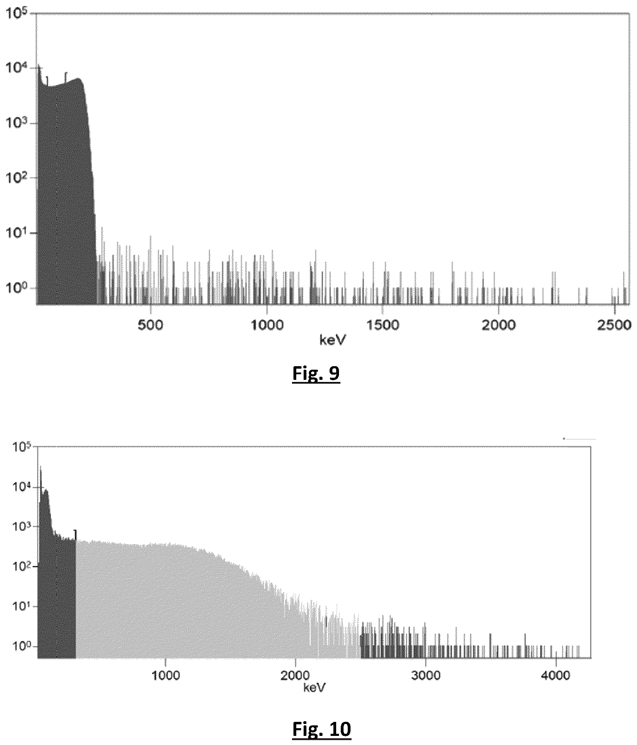

L'uranium comporte des isotopes émetteurs α, en premier lieu desquels $^{234}$U ou [238]U. Afin d'estimer la contribution de particules α dans le spectre β mesuré, on a disposé une source de $^{244}$Cm, d'activité 2800 Bq, à 3 mm du matériau détecteur. $^{244}$Cm émet des particules α d'énergie supérieure à 5700 keV, ce qui est bien supérieur aux énergies des particules α émises par les isotopes de U, par exemple 4775 keV pour [234]U. La figure 9 montre le spectre mesuré selon une période d'acquisition de 900s (axe des ordonnées : nombre d'impulsions détectées - axe des abscisses : énergie (keV)). On observe que la contribution des particules α se limite aux faibles énergies, inférieures à 270 keV. Ainsi, la valeur spectrale, dans la première plage d'énergie, peut être considérée comme non affectée par les particules α émises par les isotopes d'uranium.

Les particules α détectées par le détecteur peuvent être susceptibles d'influencer la valeur spectrale N2 dans la deuxième bande d'énergie ΔE2, , voire également la valeur spectrale N1 dans la première bande spectrale ΔE1. C'est notamment le cas lorsque le détecteur comporte un matériau semi-conducteur, par exemple Si. Afin d'éviter une influence des particules α, l'enveloppe 14 est avantageusement dimensionnée pour stopper les particules α d'énergie 4.5 MeV ou 5 MeV. Lorsque l'enveloppe est réalisée en PET (Polyéthylène Téréphtalate) aluminisé, une épaisseur de 30 μm permet de stopper les particules α, tout en absorbant, de façon considérée comme négligeable, les particules β.

Sur la figure 9, les quelques coups observés à une énergie supérieure à 270 keV correspondent à des photons γ après soustraction du bruit de fond, résultant de fluctuations statistiques.

La figure 10 montre un spectre β mesuré expérimentalement sur une paroi de béton contaminée en uranium d'enrichissement 1%. Sur ce spectre, on a matérialisé la première plage d'énergie , comprise entre 300 keV et 2500 keV. Le détecteur était un détecteur EJ200 (Eljen Technology), de surface sensible 2430 cm[2] (493 mm de côté). L'étalonnage en énergie du spectre, c'est-à-dire la correspondance entre la valeur des amplitudes des impulsions et l'énergie, a été effectué en utilisant une source de $^{207}$Bi, qui émet des électrons, à des valeurs d'énergie discrètes, par conversion interne.

Afin de convertir la valeur spectrale, dans la première plage d'énergie, en valeur d'activité de $^{238}$U, il est nécessaire de prendre en compte une fonction de transfert. La fonction de transfert peut être obtenue en modélisant des spectres β correspondant à des activités connues en $^{238}$U, et donc en [234m]Pa. On peut déterminer différentes fonctions de transfert, correspondant respectivement à différentes hypothèses de répartition de la contamination dans l'objet analysé. La contamination en uranium peut être considérée comme surfacique (par exemple sur des objets métalliques), ou ayant diffusé dans l'objet, par exemple en cas de contamination liquide d'objets poreux, tels un sol ou une paroi en béton.

La figure 11 montre le résultat de modélisations numériques d'un détecteur tel que précédemment décrit, disposé à une distance de 7.5 mm d'une paroi béton, de densité 2.3, dont l'activité en uranium $^{238}$U était répartie selon différentes profondeurs. On a considéré une activité unitaire de $^{238}$U (1 Bq/g ou 1 Bq/cm[2] dans l'hypothèse d'une contamination surfacique). Le modèle du détecteur a été validé en laboratoire en comparant des spectres β respectivement mesurés et modélisés en exposant le détecteur à une source étalon de [207]Bi.

Dans le cas d'une contamination surfacique, on a modélisé une activité répartie sur les 10 premiers μm de la paroi. La fonction de transfert est de 1050s$^{-1}$.Bq$^{-1}$.cm$^2$ ± 15%.

Dans le cas d'une contamination volumique, on a pris en compte le parcours maximal, dans le béton, des particules β émises par $^{234m}$Pa, pouvant être estimé à 2 mm. Compte tenu de cette faible épaisseur, le gradient de contamination a été considéré comme homogène.

Sur la figure 11, l'axe des ordonnées correspond à la valeur de la fonction de transfert *FT* (unité s$^{-1}$.Bq$^{-1}$.cm$^2$) et l'axe des abscisses correspond à la profondeur de contamination considérée. Sur

la figure 11, la fonction de transfert correspond à première valeur spectrale N1, dans une plage d'énergie de [300 keV - 2500 keV], pour une activité unitaire de 1Bq.g$^{-1}$.

Si N1 correspond au taux de comptage dans la première bande d'énergie ΔE1, l'activité *A[238U]*, en Bq.g$^{-1}$ ou en Bq.cm$^{-2}$, est obtenue selon l'expression :

$$A[238U] = \frac{N1}{FT} \quad (1)$$

On a mis en œuvre le détecteur précédemment décrit sur une installation d'enrichissement d'uranium par diffusion gazeuse. La limite de détection était telle que :

$$LD = \frac{k_{1-\beta}^2 + 2 \times SD}{FT \times T_S} \quad (2)$$

Avec

$k_{1-\beta}$ = 1.96 : niveau de risque de type $\beta$ pour un intervalle de confiance à 95% ;

$T_S$ : durée d'acquisition, en secondes ;

$FT$ = fonction de transfert, exprimée en Bq.g$^{-1}$ ou en Bq.cm$^{-2}$

$SD$ est le seuil de détection, tel que

$$SD = k_{1-\alpha} \times \sqrt{\left(1 + \frac{1}{n}\right) \times (r_{bdf} \times T_s)} \quad (3)$$

$k_{1-\alpha}$ = 1.96 : niveau de risque de type $\alpha$ pour un intervalle de confiance à 95% ;

n : rapport des durées d'acquisition respectives du bruit de fond et de la mesure

$r_{bdf}$ : taux de comptage mesuré dans la première bande d'énergie $\Delta$E1, dans une mesure de bruit de fond, sur une paroi considérée comme non contaminée. Unité coups par seconde.

En fonction de l'unité de la fonction de transfert, la limite de détection est exprimée en Bq.g$^{-1}$ ou en Bq.cm$^{-2}$

Les tableaux 2 et 3 représentent des valeurs de limites de détection respectivement exprimées en activité surfacique et en activité massique. Les valeurs sont calculées à partir des expressions (2) et (3), en considérant une durée de la mesure égale à la durée de la mesure du bruit de fond. On a également pris en compte une contribution de l'activité naturelle dans le spectre, décrite en lien avec la figure 7. Les activités des isotopes naturelles prises en compte étaient 15 Bq/Kg pour $^{232}$Th, 22 Bq/Kg pour $^{238}$U, et 485 Bq/Kg pour $^{40}$K. Chaque mesure comporte une mesure avec l'écran d'aluminium et une mesure sans écran d'aluminium, de mêmes durées.

Tableau 2

LD en Bq.cm$^{-2}$

| Radionucléide | ROI | $r_{BDF}$ (s$^{-1}$) | FT (s$^{-1}$.Bq$^{-1}$.cm$^2$) | Ts (s) 60 | 180 | 300 | 600 | 1800 |
|---|---|---|---|---|---|---|---|---|
| $^{238}$U ($^{234m}$Pa) | [300 - 2500] keV | 48 $\pm$ 8 % | 1050 $\pm$ 15 % | 4,8.10$^{-3}$ | 3,4.10$^{-3}$ | 2,2.10$^{-3}$ | 1,5.10$^{-3}$ | 8,7.10$^{-4}$ |

Tableau 3

LD en Bq.g$^{-1}$

| Radionucléide | ROI | $r_{BDF}$ (s$^{-1}$) | FT (s$^{-1}$.Bq$^{-1}$.g) | 60 | 180 | Ts (s) 300 | 600 | 1800 |
|---|---|---|---|---|---|---|---|---|
| $^{238}$U ($^{234m}$Pa) | [300 - 2500] keV | 48 $\pm$ 8 % | 149 $\pm$ 15 % | 3,4.10$^{-2}$ | 2,4.10$^{-2}$ | 1,5.10$^{-2}$ | 1,1.10$^{-2}$ | 6,1.10$^{-3}$ |

On observe que la méthode permet d'obtenir des limites de détection faibles, dans des durées d'acquisition raisonnables. Les limites de détection présentées dans les tableaux 2 et 3 concernent $^{238}$U via la détection du spectre $\beta$ de $^{234m}$Pa. Plus l'enrichissement augmente, plus la quantité de $^{238}$U diminue relativement à la quantité totale d'uranium. Aussi, si l'on souhaite conserver une limite de détection faible en uranium, il faut augmenter la durée d'acquisition.

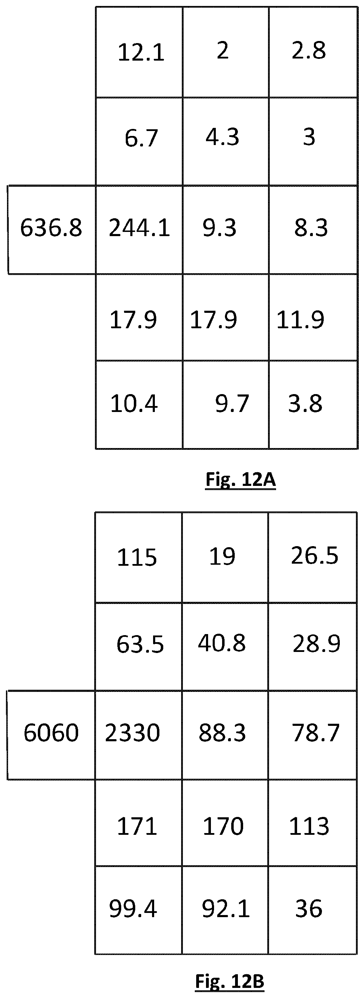

Des cartographies ont été effectuées sur des parois de l'installation d'enrichissement d'uranium par diffusion gazeuse. La figure 12A montre des taux de comptage mesurés (cps = coups par seconde) sur des éléments de surface de dimensions 50 cm x 50 cm. La figure 12B montre les niveaux d'activité $^{238}$U correspondants (Bq/m$^2$). L'enrichissement en

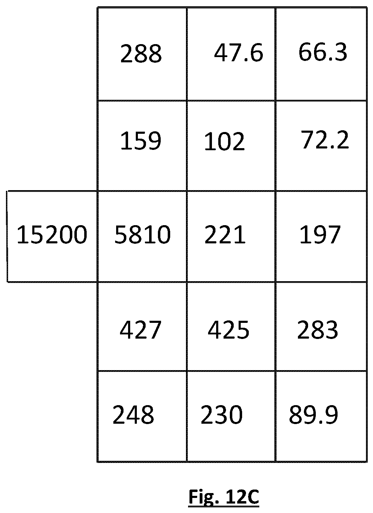

$^{235}$U étant connu, on a estimé des niveaux d'activité en U, ces derniers étant représentés sur la figure 12C (Bq/m$^2$). Lorsque l'enrichissement n'est pas connu, il peut être déterminé par des méthodes usuelles, par exemple par spectrométrie gamma.

Comme précédemment décrit, en lien avec les figures 8A et 8B, l'enrichissement η en $^{235}$U peut être évalué à partir d'un ratio entre la première valeur spectrale N1 et la deuxième valeur spectrale N2. La deuxième bande d'énergie ΔE2 est comprise entre 0 keV et 250 keV. On peut par exemple prendre en compte une deuxième bande d'énergie ΔE2 s'étendant de E2min=150 keV jusqu'à E2max=300 keV. La deuxième borne minimale E2min de 150 keV a été déterminée de façon à limiter l'influence du rayonnement gamma : entre 150 keV et 300 keV, on a constaté que la contribution du rayonnement gamma dans le spectre β est stable, et peut être aisément soustraite en prenant en compte la mesure avec l'écran d'aluminium. En prenant en compte une deuxième énergie minimale E2min inférieure à 150 keV, la contribution du rayonnement gamma dans le spectre β peut davantage fluctuer, du fait de la sensibilité plus élevée du matériau scintillateur plastique à l'égard des photons de faible énergie.

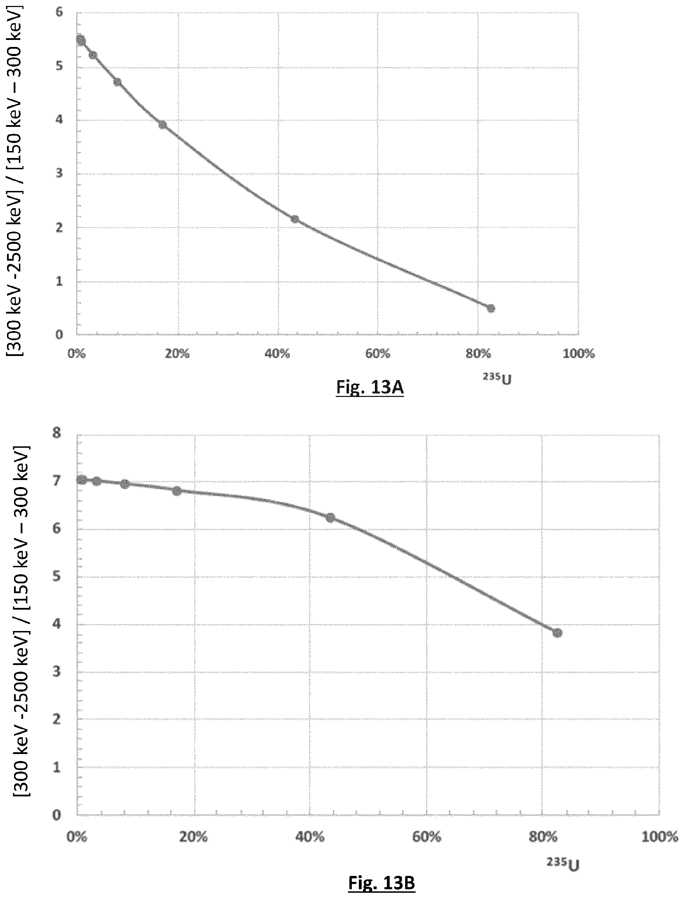

La figure 13A montre l'évolution d'un ratio entre les première et deuxième valeurs spectrales. La première bande d'énergie est [300 keV - 2500 keV] et la deuxième bande d'énergie est [150 keV - 300 keV]. La contamination est supposée surfacique, i-e considérée comme répartie sur une épaisseur de 10 μm.

La figure 13B montre l'évolution d'un ratio entre les valeurs spectrales (taux de comptage) dans la première bande d'énergie [300 keV - 2500 keV] et dans la deuxième bande d'énergie [150 keV - 300 keV] dans le cas d'une contamination massique, répartie sur une épaisseur de 2 mm.

Sur les figures 13A et 13B, l'axe des ordonnées correspond au ratio N1/N2 et l'axe des abscisses correspond à l'enrichissement en $^{235}$U, exprimé en %. Les figures 13A et 13B ont été établies sur la base de modélisations avec le code de calcul MCNP6.

On observe une corrélation entre l'enrichissement et le ratio N1/N2. Ainsi, en appliquant une fonction de calibration d'enrichissement, telle que décrite en lien avec les figures 13A ou 13B, on peut estimer l'enrichissement à partir du ratio N1/N2. Les figures 13A et 13B montrent l'établissement de fonctions de calibration d'enrichissement, respectivement pour une activité surfacique et une activité volumique.

Il est précisé que le recours à la spectrométrie β pour estimer un taux d'enrichissement η peut constituer un aspect indépendant de l'invention.

En pratique, le recours à un spectre de bruit de fond, obtenu selon la configuration fermée, avec l'écran 15, n'est pas nécessaire. En effet, si l'on souhaite effectuer un contrôle grossier, des mesures effectuées uniquement selon la configuration ouverte, i-e sans écran, peuvent s'avérer suffisantes pour effectuer un contrôle de premier niveau. Le couplage entre la configuration ouverte et la configuration fermée permet de soustraire le bruit de fond, essentiellement dû aux photons y, ce qui permet d'obtenir des mesures plus précises : quantification de l'activité $^{238}$U plus précise ou valeur de l'enrichissement plus exacte.

En outre, l'expérience à montré que dans la première bande d'énergie ΔE1 , s'étendant entre 300 keV jusqu'à 2500 keV, la contribution du bruit de fond gamma dû à la radioactivité naturelle est stable, dans une même installation. Or, la réalisation de mesures avec et sans écran augmente la durée totale de la mesure. Compte tenu de la faible dispersion de la contribution, il est envisageable de ne pas effectuer une mesure systématique dans la configuration fermée.

Il est possible de soustraire, à un spectre mesuré en configuration ouverte, un spectre mémorisé, effectué dans la configuration fermée.

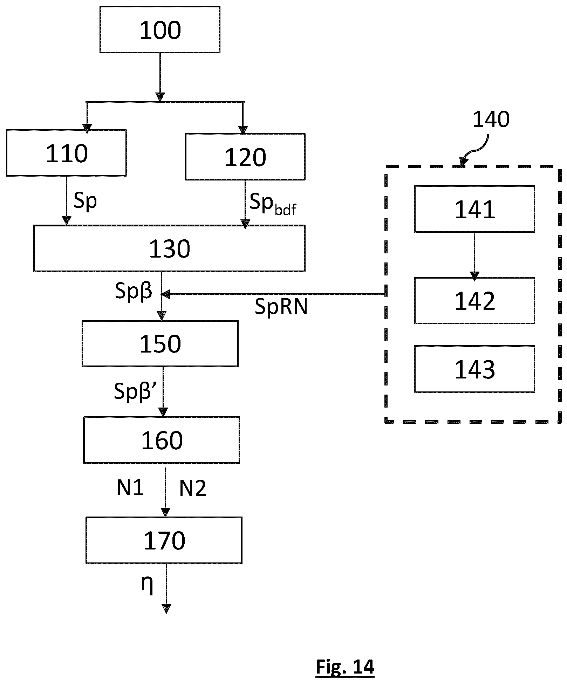

La figure 14 résume les principales étapes d'un procédé selon l'invention.

Etape 100 : disposition d'un détecteur face à l'objet à caractériser

Etape 110 : acquisition d'un spectre, dans la configuration ouverte : il s'agit du spectre mesuré Sp.

Etape 120 : acquisition d'un spectre de bruit de fond Sp$_{bdf}$, dans la configuration fermée, ou prise en compte d'un spectre acquis dans la configuration fermée.

Etape 130 : soustraction du spectre résultant de l'étape 120 du spectre résultant de l'étape 110. Le spectre résultant de cette étape est un spectre β brut Spβ.

Etape 140 : prise en compte de l'activité naturelle β de l'objet. Cette étape comporte les sous-étapes suivantes :

- Sous-étape 141 : prise en compte d'un niveau d'activité naturelle de l'objet : le niveau d'activité naturelle peut avoir été estimé par une mesure sur un objet comparable, considéré comme non contaminé.
- Sous-étape 142 : estimation d'un spectre β naturel SpRN (ou spectre β RN) résultant de l'étape 141.

Alternativement, l'étape 140 comporte une sous-étape 143 de mesure d'un spectre β brut effectué sur un objet considéré comme représentatif de l'objet mesuré, et non contaminé. Il s'agit de mettre en œuvre les étapes 110 et 120 sur l'objet considéré comme représentatif, ce qui permet d'obtenir le spectre β naturel

L'étape 140 est préférable, mais optionnelle.

Etape 150 : correction du spectre β brut, résultant de l'étape 130, en prenant en compte le spectre β naturel résultant de l'étape 140. Cette étape est optionnelle. L'étape 150 permet d'obtenir un spectre β net (ou spectre β corrigé) noté Spβ'

Etape 160 : détermination d'une première valeur spectrale N1 dans la première bande d'énergie ΔE1, et d'une deuxième valeur spectrale N2, dans la deuxième bande d'énergie ΔE2 à partir du spectre β net Spβ'résultant de l'étape 150 ou du spectre β brut résultant de l'étape 130.

Etape 170 : application de la fonction de calibration d'enrichissement à un ratio entre la première valeur spectrale et la deuxième valeur spectrale, de façon à estimer le taux d'enrichissement η en masse de $^{235}U$.

Les étapes 130 à 170 peuvent être mises en œuvre par l'unité de traitement 20.

L'invention pourra être mise en œuvre sur des installations d'enrichissement ou de fabrication du combustible.

**Revendications**

1. Procédé d'estimation d'un enrichissement en $^{235}U$ d'un objet, à l'aide d'un détecteur, le détecteur étant configuré pour former des impulsions lorsqu'il est exposé à des particules β, le détecteur étant relié à un circuit de mesure spectrométrique, configuré pour établir un spectre, le spectre correspondant à un histogramme de l'énergie des impulsions formées durant une période de mesure, le procédé comportant les étapes suivantes :

   - a) disposition du détecteur face à l'objet et acquisition d'un spectre de mesure (Sp), le spectre de mesure étant représentatif d'une distribution en énergie de particules β émises par des descendants de $^{238}U$ et par des descendants de $^{235}U$;
   - b) à partir du spectre de mesure, formation éventuelle d'un spectre corrigé (Spβ ; Spβ');
   - c) à partir du spectre de mesure ou du spectre corrigé, détermination d'une première valeur spectrale (N1) dans une première bande d'énergie (ΔE1) s'étendant à partir d'une première énergie minimale (E1min), la première énergie minimale étant supérieure ou égale à 300 keV ;
   - d) à partir du spectre de mesure ou du spectre corrigé, détermination d'une deuxième valeur spectrale dans une deuxième bande d'énergie (ΔE2) s'étendant en dessous d'une deuxième énergie maximale (E2max), la deuxième énergie maximale étant inférieure ou égale à 300 keV
   - e) calcul d'un ratio entre la première valeur spectrale et la deuxième valeur spectrale ;
   - f) application d'une fonction de calibration au ratio déterminé lors de l'étape e), de façon à estimer l'enrichissement en $^{235}U$.

2. Procédé selon la revendication 1, dans lequel l'étape b) comporte les sous-étapes :

   - b1) interposition d'un écran (15) entre le détecteur et l'objet et acquisition d'un spectre de fond, l'écran étant configuré pour absorber les particules β émises par l'objet ;
   - b2) correction du spectre de mesure, en utilisant le spectre de fond, pour obtenir un spectre corrigé.

3. Procédé selon la revendication 2, dans lequel l'écran (15) utilisé lors de la sous-étape b1) est un écran d'aluminium dont l'épaisseur est supérieure ou égale à 3 mm ou à 4 mm.

4. Procédé selon la revendication l'une quelconque des revendications précédentes, dans lequel lors de l'étape c), la première bande d'énergie s'étend jusqu'à une première énergie maximale (E1max), l'énergie maximale étant supérieure ou égale à 1000 keV ou 1500 keV ou 2000 keV.

5. Procédé selon l'une quelconque des revendications précédentes, dans lequel lors de l'étape a), la distance entre le détecteur et l'objet est :

   - supérieure à 1 mm ou à 5 mm ;
   - et/ou inférieure à 20 mm ou à 10 mm.

6. Procédé selon l'une quelconque des revendications précédentes, dans lequel l'objet est un objet naturellement radioactif, le procédé comportant :

   - (i) prise en compte d'une activité naturelle de l'objet ;
   - (ii) modélisation d'un spectre β de l'activité naturelle de l'objet (SpRN) détecté par le détecteur ;
   - l'étape b) comporte une correction du spectre mesuré en utilisant le spectre β de l'activité naturelle de l'objet, pour obtenir le spectre corrigé.

7. Procédé selon la revendication 6, dans lequel l'étape (i) résulte d'une mesure par spectrométrie gamma réalisée sur l'objet.

8. Procédé selon l'une quelconque des revendications précédentes, dans lequel le détecteur comporte un matériau scintillateur organique.

9. Procédé selon l'une quelconque des revendications 1 à 8, dans lequel le détecteur comporte un matériau semi-conducteur.

10. Dispositif d'estimation d'un enrichissement en $^{235}$U d'un objet, le dispositif comportant:

   - un détecteur (10) comportant un matériau détecteur (11) configuré pour former des impulsions sous l'effet d'une exposition à des particules $\beta$ ;
   - un circuit de spectrométrie (13), relié au détecteur, et configuré pour former un histogramme de l'amplitude des impulsions détectées par le détecteur durant une période d'acquisition ;
   - une unité de traitement (20), reliée au circuit de spectrométrie, et configurée pour mettre en œuvre les étapes b) à f) d'un procédé selon l'une quelconque des revendications précédentes.

11. Dispositif selon la revendication 10, dans lequel le détecteur comporte un matériau scintillateur organique, l'épaisseur du matériau scintillateur organique étant comprise entre 3 mm et 10 mm.

12. Dispositif selon la revendication 10, dans lequel le détecteur comporte un matériau semi-conducteur.

13. Dispositif selon l'une quelconque des revendications 10 à 12, dans lequel le détecteur est recouvert d'une enveloppe (14) configurée pour absorber des particules $\alpha$ d'énergie supérieure ou égale à 4.5 MeV ou à 5 MeV.

14. Dispositif selon l'une quelconque des revendications 10 à 13, dans lequel le dispositif comporte un écran mobile (15), configuré pour passer d'une configuration fermée, dans laquelle l'écran est interposé entre le matériau détecteur (11) et l'objet (2), à une configuration ouverte dans laquelle l'écran laisse libre un espace entre le matériau détecteur et l'objet.


**Patentansprüche**

1. Verfahren zur Schätzung einer Anreichung eines Gegenstands an $^{235}$U mithilfe eines Detektors, wobei der Detektor dazu ausgestaltet ist, Impulse zu bilden, wenn er $\beta$-Teilchen ausgesetzt ist, wobei der Detektor mit einer spektrometrischen Messschaltung verbunden ist, die dazu ausgestaltet ist, ein Spektrum zu erstellen, wobei das Spektrum einem Histogramm der Energie der während einer Messperiode gebildeten Impulse entspricht, wobei das Verfahren die folgenden Schritte umfasst:

   - a) Anordnen des Detektors gegenüber dem Gegenstand und Erfassen eines Messspektrums (Sp), wobei das Messspektrum für eine Energieverteilung von $\beta$-Teilchen repräsentativ ist, die von den Tochterelementen von $^{238}$U und von den Tochterelementen von $^{235}$U emittiert werden;
   - b) ausgehend von dem Messspektrum, gegebenenfalls Bilden eines korrigierten Spektrums (S$\rho\beta$; S$\rho\beta$');
   - c) ausgehend von dem Messspektrum oder von dem korrigierten Spektrum, Ermitteln eines ersten spektralen Werts (N1) in einem ersten Energieband ($\Delta$E1), das sich ausgehend von einer ersten minimalen Energie (E1min) aus erstreckt, wobei die erste minimale Energie größer oder gleich 300 keV ist;
   - d) ausgehend von dem Messspektrum oder von dem korrigierten Spektrum, Ermitteln eines zweiten spektralen Werts in einem zweiten Energieband ($\Delta$E2), das sich unterhalb einer zweiten maximalen Energie (E2max) erstreckt, wobei die zweite maximale Energie kleiner oder gleich 300 keV ist
   - e) Berechnen eines Verhältnisses zwischen dem ersten spektralen Wert und dem zweiten spektralen Wert;
   - f) Anwenden einer Kalibrierungsfunktion auf das beim Schritt e) ermittelte Verhältnis, so dass eine Anreicherung an $^{235}$U geschätzt wird.

2. Verfahren nach Anspruch 1, wobei der Schritt b) die folgenden Teilschritte umfasst:

   - b1) Anordnen eines Schirms (15) zwischen dem Detektor und dem Gegenstand und Erfassen eines Hintergrundspektrums, wobei der Schirm dazu ausgestaltet ist, die von dem Gegenstand emittierten $\beta$-Teilchen zu

**EP 4 394 454 B1**

absorbieren;

- b2) Korrigieren des Messspektrums unter Verwendung des Hintergrundspektrums, um ein korrigiertes Spektrum zu erhalten.

3. Verfahren nach Anspruch 2, wobei der beim Teilschritt b1) verwendete Schirm (15) ein Aluminiumschirm ist, dessen Dicke größer oder gleich 3 mm oder 4 mm ist.

4. Verfahren nach einem der vorhergehenden Ansprüche, wobei sich beim Schritt c) das erste Energieband bis zu einer ersten maximalen Energie (E1max) erstreckt, wobei die maximale Energie größer oder gleich 1000 keV oder 1500 keV oder 2000 keV ist.

5. Verfahren nach einem der vorhergehenden Ansprüche, wobei beim Schritt a) der Abstand zwischen dem Detektor und dem Gegenstand:

   - größer als 1 mm oder als 5 mm ist;
   - und/oder kleiner als 20 mm oder als 10 mm ist.

6. Verfahren nach einem der vorhergehenden Ansprüche, wobei der Gegenstand ein natürlicherweise radioaktiver Gegenstand ist, wobei das Verfahren umfasst:

   - (i) Berücksichtigen einer natürlichen Aktivität des Gegenstands;
   - (ii) Modellieren eines β-Spektrums der natürlichen Aktivität des von dem Detektor detektierten Gegenstands (SpRN);
   - wobei der Schritt b) eine Korrektur des gemessenen Spektrums unter Verwendung des β-Spektrums der natürlichen Aktivität des Gegenstands umfasst, um das korrigierte Spektrum zu erhalten.

7. Verfahren nach Anspruch 6, wobei der Schritt (i) aus einer an dem Gegenstand ausgeführten Messung durch Gammaspektroskopie resultiert.

8. Verfahren nach einem der vorhergehenden Ansprüche, wobei der Detektor ein organisches Szintillatormaterial umfasst.

9. Verfahren nach einem der Ansprüche 1 bis 8, wobei der Detektor ein Halbleitermaterial umfasst.

10. Vorrichtung zur Schätzung einer Anreicherung eines Gegenstands an $^{235}$U, wobei die Vorrichtung umfasst:

    - einen Detektor (10), der ein Detektormaterial (11) umfasst, das dazu ausgestaltet ist, unter der Wirkung einer Exposition gegenüber β-Teilchen Impulse zu bilden;
    - eine Spektroskopieschaltung (13), die mit dem Detektor verbunden ist und dazu ausgestaltet ist, ein Histogramm der Amplitude der von dem Detektor während einer Erfassungsperiode detektierten Impulse zu bilden;
    - eine Verarbeitungseinheit (20), die mit der Spektroskopieschaltung verbunden ist und dazu ausgestaltet ist, die Schritte b) bis f) eines Verfahrens nach einem der vorhergehenden Ansprüche durchzuführen.

11. Vorrichtung nach Anspruch 10, wobei der Detektor ein organisches Szintillatormaterial umfasst, wobei die Dicke des organischen Szintillatormaterials zwischen 3 mm und 10 mm beträgt.

12. Vorrichtung nach Anspruch 10, wobei der Detektor ein Halbleitermaterial umfasst.

13. Vorrichtung nach einem der Ansprüche 10 bis 12, wobei der Detektor mit einer Hülle (14) bedeckt ist, die dazu ausgestaltet ist, α-Teilchen mit einer Energie größer oder gleich 4,5 MeV oder 5 MeV zu absorbieren.

14. Vorrichtung nach einem der Ansprüche 10 bis 13, wobei die Vorrichtung einen beweglichen Schirm (15) umfasst, der dazu ausgestaltet ist, von einer geschlossenen Konfiguration, in welcher der Schirm zwischen dem Detektormaterial (11) und dem Gegenstand (2) angeordnet ist, zu einer offenen Konfiguration überzugehen, in welcher der Schirm einen Raum zwischen dem Detektormaterial und dem Gegenstand lässt.

13

**Claims**

1. Method for estimating the $^{235}$U enrichment of an object using a detector, the detector being configured to form pulses when exposed to β particles, the detector being connected to a spectrometric measurement circuit configured to establish a spectrum, the spectrum corresponding to a histogram of the energy of the pulses formed during a measurement period, the method comprising the following steps:

   - a) positioning the detector opposite the object and acquiring a measurement spectrum (Sp), the measurement spectrum being representative of an energy distribution of β particles emitted by descendants of $^{238}$U and by descendants of $^{235}$U;
   - b) from the measurement spectrum, possibly forming a corrected spectrum (Spβ; Spβ');
   - c) from the measurement spectrum or the corrected spectrum, determining a first spectral value (N1) in a first energy band (ΔE1) extending from a first minimum energy (E1min), the first minimum energy being greater than or equal to 300 keV;
   - d) from the measurement spectrum or the corrected spectrum, determining a second spectral value in a second energy band (Δ E2) extending below a second maximum energy (E2max), the second maximum energy being less than or equal to 300 keV;
   - e) calculating a ratio between the first spectral value and the second spectral value;
   - f) applying a calibration function to the ratio determined in step e) in order to estimate the $^{235}$U enrichment.

2. Method according to claim 1, wherein step b) comprises the sub-steps:

   - b1) interposing a screen (15) between the detector and the object and acquiring a background spectrum, the screen being configured to absorb the β particles emitted by the object;
   - b2) correcting the measurement spectrum using the background spectrum to obtain a corrected spectrum.

3. Method according to claim 2, wherein the screen (15) used in sub-step b1) is an aluminium screen with a thickness greater than or equal to 3 mm or 4 mm.

4. Method according to any one of the preceding claims, wherein during step c), the first energy band extends up to a first maximum energy (E1max), the maximum energy being greater than or equal to 1000 keV or 1500 keV or 2000 keV.

5. Method according to any of the preceding claims, wherein in step a), the distance between the detector and the object is:

   - greater than 1 mm or 5 mm;
   - and/or less than 20 mm or 10 mm.

6. Method according to any of the preceding claims, wherein the object is a naturally radioactive object, the method comprising:

   - (i) taking into account natural activity of the object;
   - (ii) modelling a β spectrum of the natural activity of the object (SpRN) detected by the detector;
   - Step (b) involves correcting the measured spectrum using the β spectrum of the natural activity of the object to obtain the corrected spectrum.

7. Method according to claim 6, wherein step (i) results from a gamma spectrometry measurement performed on the object.

8. Method according to any of the preceding claims, wherein the detector comprises an organic scintillator material.

9. Method according to any of claims 1 to 8, wherein the detector comprises a semiconductor material.

10. Device for estimating the $^{235}$U enrichment of an object, the device comprising:

   - a detector (10) comprising a detector material (11) configured to form pulses upon exposure to β particles;
   - a spectrometry circuit (13), connected to the detector, and configured to form a histogram of the amplitude of the pulses detected by the detector during an acquisition period;

- a processing unit (20), connected to the spectrometry circuit, and configured to implement steps b) to f) of a method according to any of the preceding claims.

11. Device according to claim 10, wherein the detector comprises an organic scintillator material, the thickness of the organic scintillator material being between 3 mm and 10 mm.

12. Device according to claim 10, wherein the detector comprises a semiconductor material.

13. Device according to any of claims 10 to 12, wherein the detector is covered by an envelope (14) configured to absorb $\alpha$ particles with energy greater than or equal to 4.5 MeV or 5 MeV.

14. Device according to any of claims 10 to 13, wherein the device comprises a movable screen (15), configured to move from a closed configuration, in which the screen is interposed between the detector material (11) and the object (2), to an open configuration in which the screen leaves a space between the detector material and the object.

**Fig. 1**

Fig. 2

**Fig. 3**

**Fig. 4A**

**Fig. 4B**

**Fig. 5**

Fig. 6

Fig. 7

Fig. 8A

Fig. 8B

**Fig. 9**

**Fig. 10**

Fig. 11

| | | |
|---|---|---|
| 12.1 | 2 | 2.8 |
| 6.7 | 4.3 | 3 |
| 636.8 / 244.1 | 9.3 | 8.3 |
| 17.9 | 17.9 | 11.9 |
| 10.4 | 9.7 | 3.8 |

**Fig. 12A**

| | | |
|---|---|---|
| 115 | 19 | 26.5 |
| 63.5 | 40.8 | 28.9 |
| 6060 / 2330 | 88.3 | 78.7 |
| 171 | 170 | 113 |
| 99.4 | 92.1 | 36 |

**Fig. 12B**

| | | |
|---|---|---|
| 288 | 47.6 | 66.3 |
| 159 | 102 | 72.2 |
| 15200 | 5810 | 221 | 197 |
| 427 | 425 | 283 |
| 248 | 230 | 89.9 |

**Fig. 12C**

**Fig. 13A**

**Fig. 13B**

**Fig. 14**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ASHRAFI SALEH et al.** Measurement of natural radioactivity of Iranian granite samples using beta-gamma coincidence spectrometer and maximum likelihood method. *ENVIRONMENTAL EARTH SCIENCES*, vol. 78 (5)